# EUROPEAN PATENT APPLICATION

(11) **EP 4 568 375 A1**
(43) Date of publication of application: **11.06.2025**
(21) Application number: 23849977.6
(22) Date of filing: 26.07.2023
(51) Int. Cl.: H04W 64/00, G01S 5/10, H04W 16/26

(54) **COMMUNICATION SYSTEM**

(30) Priority: 03.08.2022 JP 2022123846
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); IWAYAMA, Naofumi, Tokyo 100-8310 (JP)
(74) Representative: Mewburn Ellis LLP
(86) International application number: PCT/JP2023/027375
(87) International publication number: WO 2024/029422

(57) **Abstract**

A communication system includes a core network-side apparatus provided with a location management function of a fifth generation radio access system, a base station applied to the fifth generation radio access system, and a repeater configured to perform relay processing between the base station and a communication terminal, the repeater being configured to notify the core network-side apparatus of at least one of information on propagation delay between the base station in connection and the repeater, information on a location of the repeater, and information on processing delay in the repeater, the communication terminal being configured to perform measurement of a positioning signal transmitted by the repeater, and notify the core network-side apparatus of measurement results of the positioning signal, and the core network-side apparatus being configured to calculate a location of the communication terminal, based on the information notified from the repeater and the measurement results notified from the communication terminal.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). An NR system has been studied, based on an LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

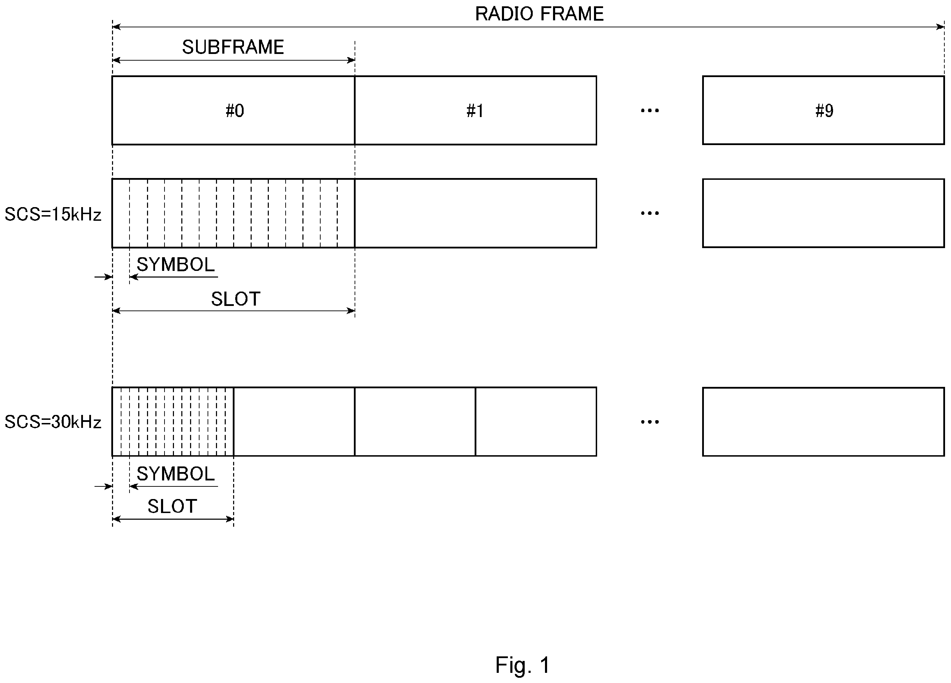

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, in other words, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with a predetermined period for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described below, resource allocation information of a paging channel (PCH) being one of transport channels to be described below, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described below. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, in other words, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, in other words, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, in other words, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described below is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides NAS mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (SL) communication (also referred to as PC5 communication) both in an Evolved Packet System (EPS) and a 5G core system to be described below is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmit power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

In 3GPP, some new technologies are proposed. For example, introduction of a smart repeater (a repeater capable of beam control) is proposed (NPL 30). A method of controlling the smart repeater from a base station is studied.

### Citation List

### Non Patent Literature

[NPL 1] 3GPP TS 36.300 V16.7.0
[NPL 2] 3GPP TS 38.300 V16.8.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.3.0
[NPL 11] 3GPP TS 38.211 V17.0.0
[NPL 12] 3GPP TS 38.212 V17.0.0
[NPL 13] 3GPP TS 38.213 V17.0.0
[NPL 14] 3GPP TS 38.214 V17.0.0
[NPL 15] 3GPP TS 38.321 V16.7.0
[NPL 16] 3GPP TS 38.322 V16.2.0
[NPL 17] 3GPP TS 38.323 V16.6.0
[NPL 18] 3GPP TS 37.324 V16.3.0
[NPL 19] 3GPP TS 38.331 V16.7.0
[NPL 20] 3GPP TS 38.401 V16.8.0
[NPL 21] 3GPP TS 38.413 V16.8.0
[NPL 22] 3GPP TS 37.340 V16.8.0
[NPL 23] 3GPP TS 38.423 V16.8.0
[NPL 24] 3GPP TS 38.305 V16.7.0
[NPL 25] 3GPP TS 23.273 V17.3.0
[NPL 26] 3GPP TR 23.703 V12.0.0
[NPL 27] 3GPP TS 23.287 V17.2.0
[NPL 28] 3GPP TS 23.303 V17.0.0
[NPL 29] 3GPP TS 38.340 V16.5.0
[NPL 30] 3GPP RP-213700
[NPL 31] 3GPP RP-201831
[NPL 32] 3GPP TS 38.215 V17.1.0
[NPL 33] 3GPP TS 38.455 V17.0.0
[NPL 34] 3GPP TS 37.355 V17.0.0

### SUMMARY

### Technical Problem

In the 5G radio access system, communication for various services is performed. In order to enable such communication, for example, support of communication using a smart repeater is also studied. In the communication system, positioning of the UE using transmission and reception of a positioning signal is also performed (see NPL 24). However, the UE is connected to the base station via the repeater, and thus there is a problem that location calculation results of the UE derived from transmission and reception results of the positioning signal are inaccurate.

In view of the problem, the present disclosure has one object to enable positioning of a UE to connect to a base station via a smart repeater and implement a high-reliability communication system.

### Solution to Problem

A communication system includes a core network-side apparatus provided with a location management function of a fifth generation radio access system, a base station applied to the fifth generation radio access system, and a repeater configured to perform relay processing between the base station and a communication terminal. The repeater is configured to notify the core network-side apparatus of at least one of information on propagation delay between the base station in connection and the repeater, information on a location of the repeater, and information on processing delay in the repeater. The communication terminal is configured to perform measurement of a positioning signal transmitted by the repeater, and notify the core network-side apparatus of measurement results of the positioning signal. The core network-side apparatus is configured to calculate a location of the communication terminal, based on the information notified from the repeater and the measurement results notified from the communication terminal.

### Advantageous Effects of Invention

According to the present disclosure, positioning of the UE to connect to the base station via the smart repeater can be enabled, and a high-reliability communication system can be implemented.

The objects, features, aspects and advantages of the present disclosure will become more apparent from the following detailed description and the accompanying drawings. Note that, in the following description, a smart repeater is simply referred to as a "repeater".

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a sequence diagram illustrating an example of a positioning procedure in the UE to connect to the base station via a repeater according to a first embodiment;
Fig. 12 is a sequence diagram illustrating another example of a positioning procedure in the UE to connect to the base station via the repeater according to the first embodiment;
Fig. 13 is a sequence diagram illustrating another example of a positioning procedure in the UE to connect to the base station via the repeater according to a second embodiment;
Fig. 14 is a sequence diagram illustrating another example of a positioning procedure in the UE to connect to the base station via the repeater according to the second embodiment;
Fig. 15 is a diagram illustrating an example of protocol stacks in the repeater, the base station, an AMF, and an LMF according to a third embodiment;
Fig. 16 is a diagram illustrating another example of protocol stacks in the repeater, the base station, the AMF, and the LMF according to the third embodiment;
Fig. 17 is a sequence diagram illustrating another example of a positioning procedure in the UE to connect to the base station via the repeater according to the third embodiment;
Fig. 18 is a sequence diagram illustrating another example of a positioning procedure in the UE to connect to the base station via the repeater according to the third embodiment;
Fig. 19 is a sequence diagram illustrating another example of a positioning procedure in the UE to connect to the base station via the repeater according to the third embodiment; and
Fig. 20 is a sequence diagram illustrating another example of a positioning procedure in the UE to connect to the base station via the repeater according to the third embodiment.

### DETAILED DESCRIPTION

### First Embodiment

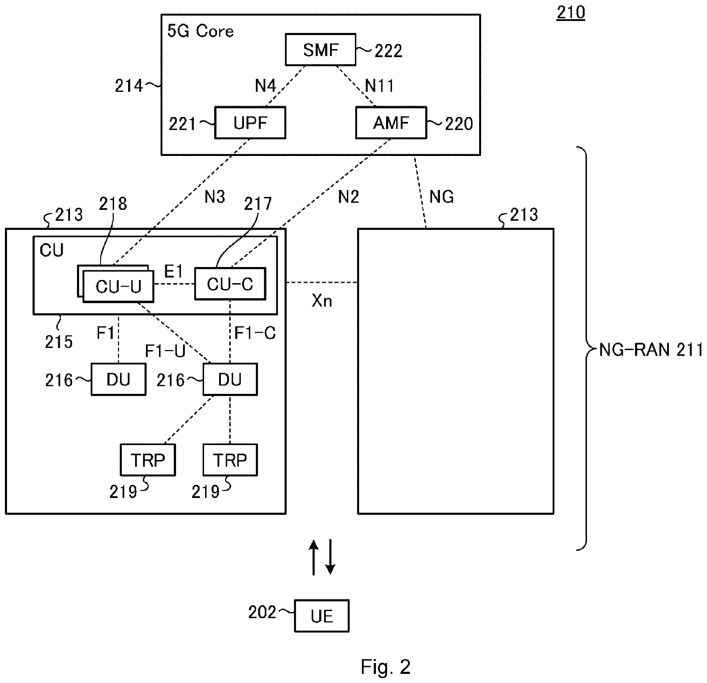

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane or a C-Plane), the SDAP is used in a user plane (which may be hereinafter also referred to as a U plane or a U-Plane), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

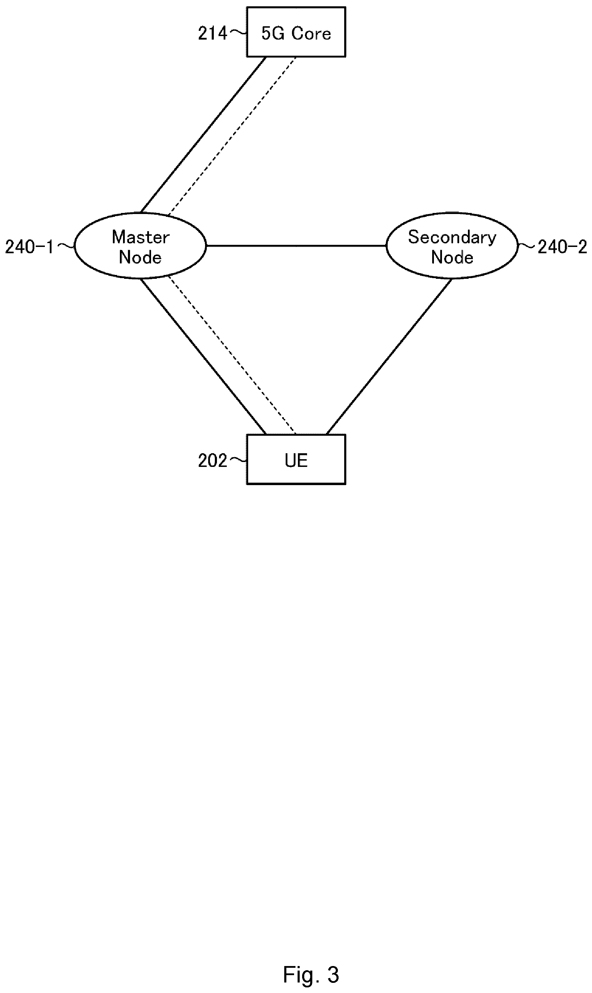

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

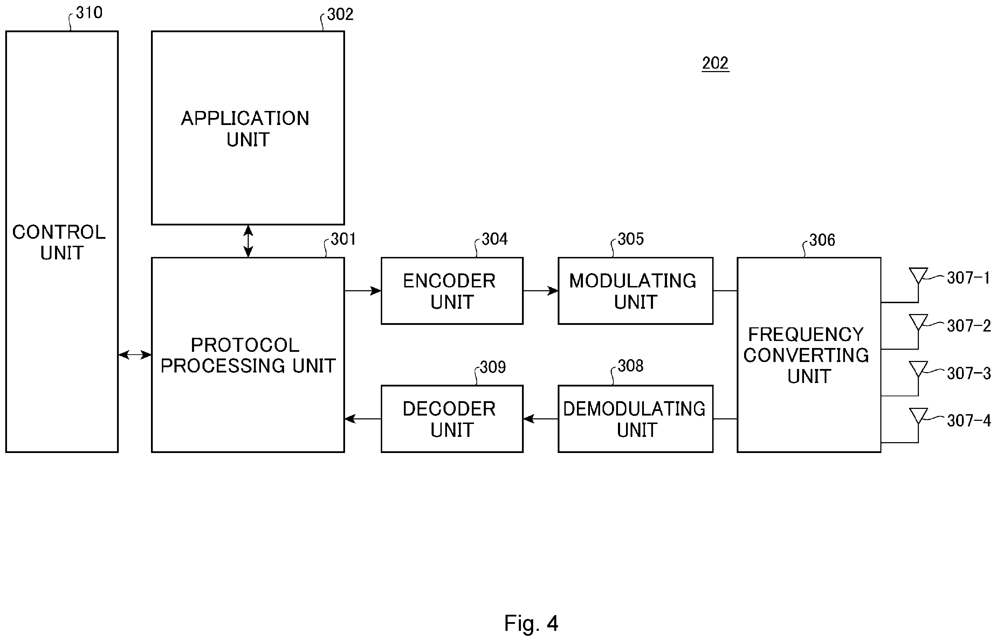

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

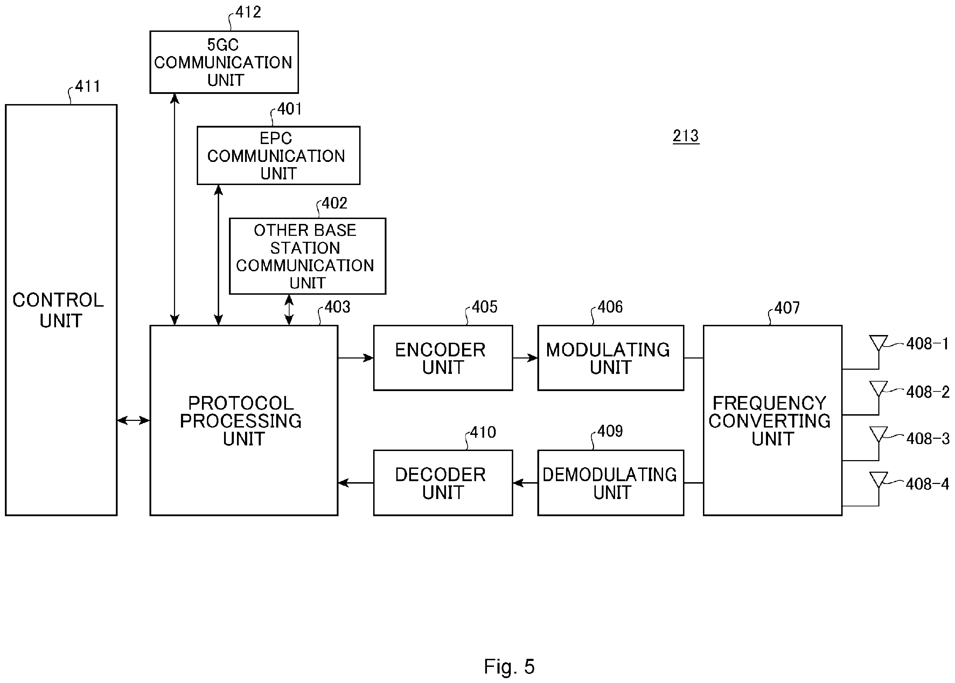

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to a frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

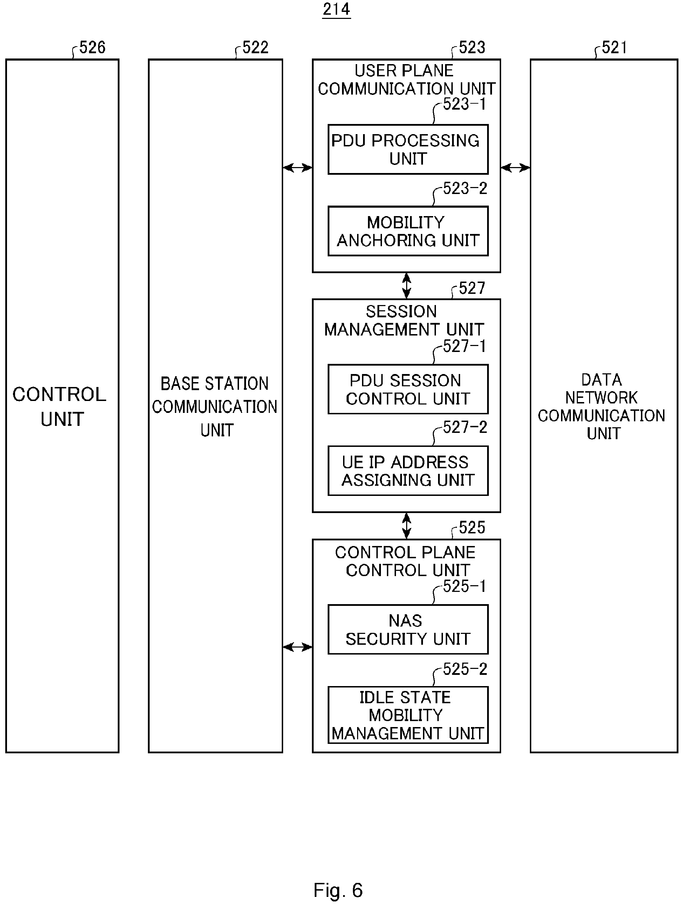

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

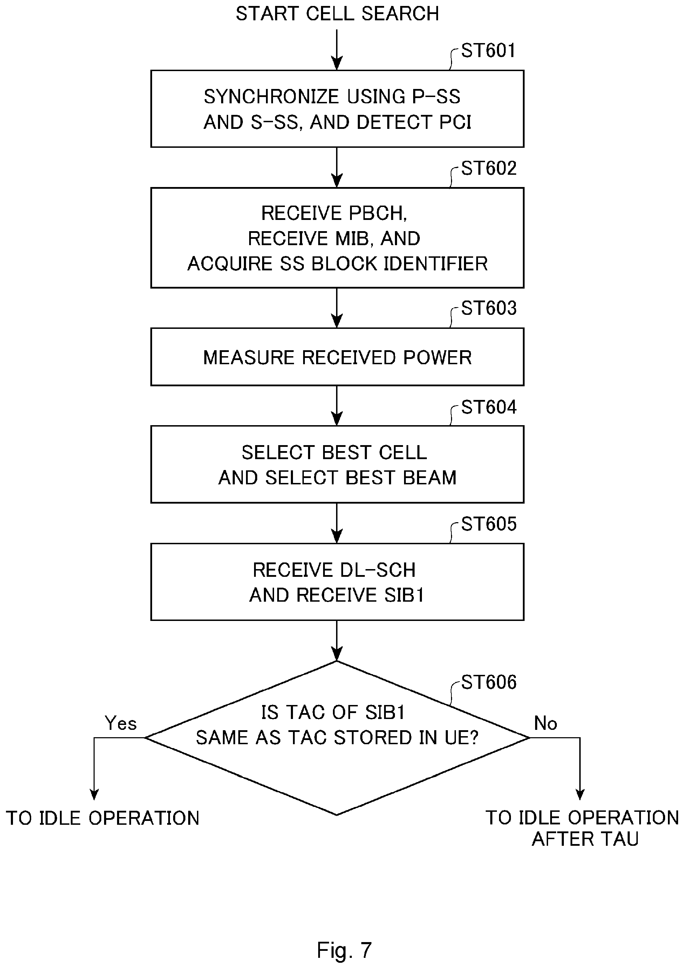

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, in other words, the best cell, out of the one or more cells detected up to Step ST603. The communication terminal selects a beam having the best received quality, for example, a beam having the highest received power of the SS block, in other words, the best beam. In selection of the best beam, for example, received power of the SS block of each SS block identifier is used.

Next, in Step ST605, the communication terminal receives a DL-SCH based on the scheduling information of the SIB1 included in the MIB, and obtains the system information block (SIB) 1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, in other words, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

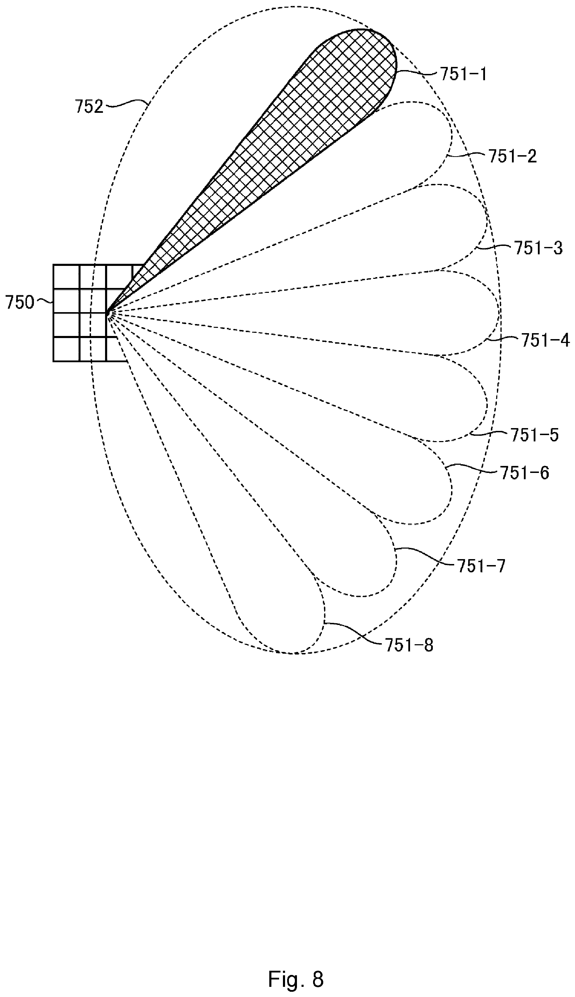

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, in other words, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

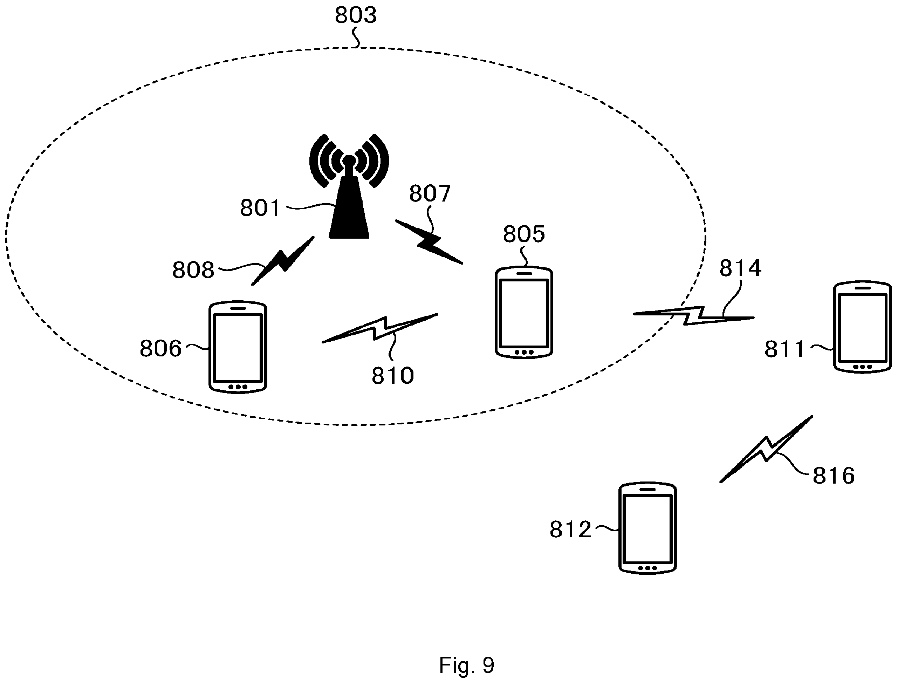

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to the decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

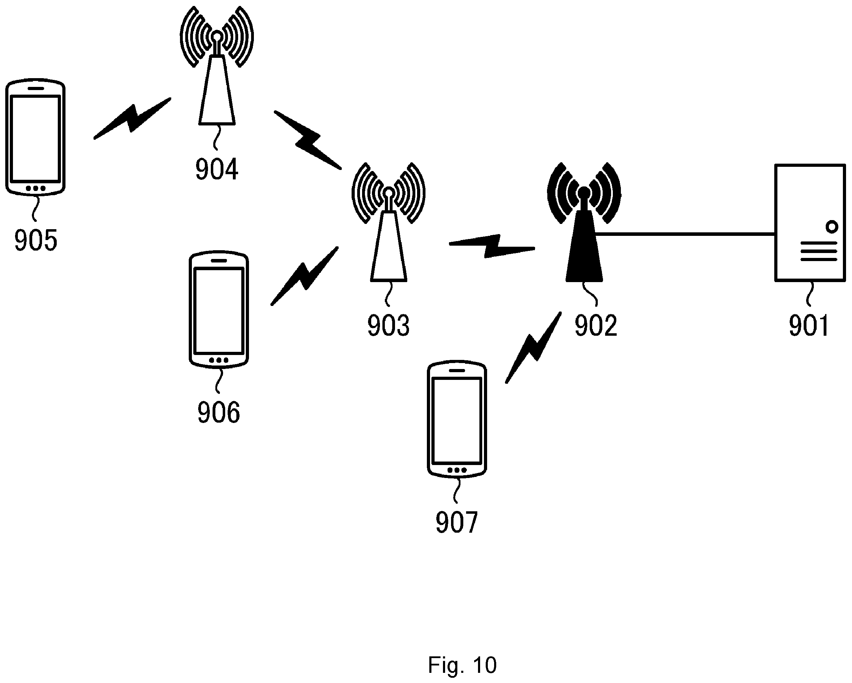

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

A repeater may be used for communication between the base station and the UE (which may be hereinafter referred to as an access link (AL) (see NPL 31)). The repeater may have a plurality of beams. The repeater may receive a signal from a transmission source, amplify the signal, and transmit the amplified signal to a transmission destination (the operation may be referred to as AL transmission and reception). The repeater may use beams for AL transmission and reception.

The base station may control the repeater. The base station may transmit a control signal to the repeater (a link used for control signal transmission between the base station and the repeater may be referred to as a fronthaul link (FL) (see NPL 31)). L1/L2 signaling may be used for the control signal.

The base station may control the beams used by the repeater. The control performed by the base station may be switching of the beams, for example. The base station may perform switching of the beams, with a trigger being movement of the UE, for example.

Positioning of the UE connected to the base station via the repeater may be performed. For example, the UE may receive a positioning signal transmitted by the base station. The positioning signal may be a PRS, for example. The UE may notify the LMF of reception results of the positioning signal. The reception results of the positioning signal may include information on a difference between the time of reception of the positioning signal from the base station and the time of reception of the positioning signal from another base station, for example. The LMF may calculate the location of the UE, using the information.

However, the UE is connected to the base station via the repeater, and thus the difference between the time of reception of the positioning signal in the UE and the time of transmission of the positioning signal from the base station cannot be directly associated with a distance between the base station and the UE. As a result, there is a problem that UE location calculation results are inaccurate.

A first embodiment will disclose methods for solving such a problem.

In the methods, the base station notifies the LMF of information on the repeater.

The information may include information on delay time in the repeater, for example. The information on the delay time may be time from when the repeater receives a signal to when the repeater performs transmission, for example.

The delay time in the repeater may be indicated by the base station in advance. The base station may notify the repeater of the indicated delay time. The repeater may receive a positioning signal from the base station, and then after the indicated time has elapsed, the repeater may transmit the positioning signal to the UE. Consequently, for example, the amount of processing of the repeater in derivation of the delay time in the repeater can be reduced.

The information on the repeater notified from the base station to the LMF may include information on propagation delay from the base station to the repeater, may include information on the location of the repeater, or may include both of the pieces of information described above. The information on the location of the repeater may be information of the location of the repeater itself, may be information on a relative location between the base station and the repeater, may be information on a distance between the base station and the repeater, or may be a combination of two or more of the above. The LMF may derive propagation delay between the base station and the LMF, using the information. Consequently, for example, regardless of a location relationship between the base station, the repeater, and the UE, accuracy of location calculation of the UE can be enhanced.

NRPPa signaling (see NPL 33 (3GPP TS 38.455)) may be used for the notification from the base station to the LMF, for example. For example, Observed Time Difference Of Arrival (OTDOA) INFORMATION RESPONSE signaling may be used, POSITIONING INFORMATION RESPONSE signaling may be used, POSITIONING INFORMATION UPDATE signaling may be used, TRP INFORMATION RESPONSE signaling may be used, POSITIONING ACTIVATION RESPONSE signaling may be used, PRS CONFIGURATION RESPONSE signaling may be used, MEASUREMENT PRECONFIGURATION CONFIRM signaling may be used, or ASSISTANCE INFORMATION FEEDBACK signaling may be used. Consequently, for example, complexity in the communication system can be avoided. New NRPPa signaling may be provided. The new NRPPa signaling may be used for the notification from the base station to the LMF.

The LMF may request the base station to transmit information on the repeater. NRPPa signaling may be used for the request. For example, OTDOA INFORMATION REQUEST signaling may be used, POSITIONING INFORMATION REQUEST signaling may be used, TRP INFORMATION REQUEST signaling may be used, POSITIONING ACTIVATION REQUEST signaling may be used, PRS CONFIGURATION REQUEST signaling may be used, MEASUREMENT PRECONFIGURATION REQUIRED signaling may be used, or ASSISTANCE INFORMATION CONTROL signaling may be used. Consequently, for example, complexity in the communication system can be avoided. New NRPPa signaling may be provided. The new NRPPa signaling may be used for the request from the LMF to the base station. The notification of the information on the repeater from the base station to the LMF may be performed with a trigger being the request.

The repeater may notify the base station of the information on the repeater. For the notification, Msg3 in 4-step random access processing may be used, MsgA in 2-step random access may be used, or other signaling, for example, RRC setup complete (RRCSetupComplete) (see NPL 19 (3GPP TS 38.331)), may be used, for example. As another example, the information may be notified by being included in a capability (for example, a UE capability).

The notification of the information from the repeater to the base station may be performed with a trigger being a request from the base station. The base station may request the repeater to transmit the information on the repeater in advance. For the request from the base station to the repeater, Msg2 in 4-step random access processing may be used, or other signaling, for example, RRC setup request signaling (see NPL 19 (3GPP TS 38.331)), may be used, for example. As another example, the request may be notified by being included in a capability (for example, UE capability) request. The request from the base station to the repeater may be performed with a trigger being the request from the LMF to the base station described above.

The base station may notify the repeater of a configuration on the positioning signal. The configuration may include information on time/frequency resources of the positioning signal, may include information on a code sequence of the positioning signal, may include information on an amplification rate in the repeater, may include information on transmit power in the repeater, may include information on a transmission timing of the signal in the repeater, or may include information on beamforming in the repeater. Consequently, for example, the repeater can determine the positioning signal transmitted from the base station, and as a result, the repeater can appropriately perform control of the positioning signal, for example, reception of the signal from the base station and transmission thereof to the UE. The repeater can acquire the information on the processing delay in the repeater described above, for example, the information on the time from when the repeater receives the signal to when the repeater performs transmission.

The configuration may include information on QCL of the positioning signal. The information may include information indicating as which beam of which reference signal (for example, SS block, CSI-RS) the positioning signal can be considered to be the same. The repeater may acquire the information on a beam to be used for transmission of the positioning signal, using the information. Consequently, for example, the size of the information on the configuration of the positioning signal can be reduced.

The LMF may inquire the base station whether or not the repeater is used. The inquiry may include information for identifying the repeater, for example, an identifier of the repeater, or may include information on the UE performing communication with the base station via the repeater. For the inquiry from the LMF to the base station, NRPPa signaling, for example, NRPPa TRP INFORMATION REQUEST signaling, may be used. New NRPPa signaling may be provided. The new NRPPa signaling may be used for the inquiry from the LMF to the base station.

The base station may notify the LMF of information on whether or not the repeater is used. The information may include information for identifying the repeater, for example, an identifier of the repeater, or may include information on the UE performing communication with the base station via the repeater. The notification of the information may be performed with a trigger being the inquiry from the LMF to the base station described above. For the notification from the base station to the LMF, NRPPa signaling, for example, NRPPa TRP INFORMATION RESPONSE signaling, may be used. New NRPPa signaling may be provided. The new NRPPa signaling may be used for the notification from the base station to the LMF.

The UE may receive the positioning signal transmitted via the repeater. The UE may notify the LMF of reception results of the positioning signal. For the notification, for example, LPP signaling (see NPL 34 (3GPP TS 37.355)) may be used. The LMF may calculate the location of the UE, using the information. The LMF may use the information on the repeater notified from the base station described above. Consequently, for example, the LMF can accurately calculate the location of the UE.

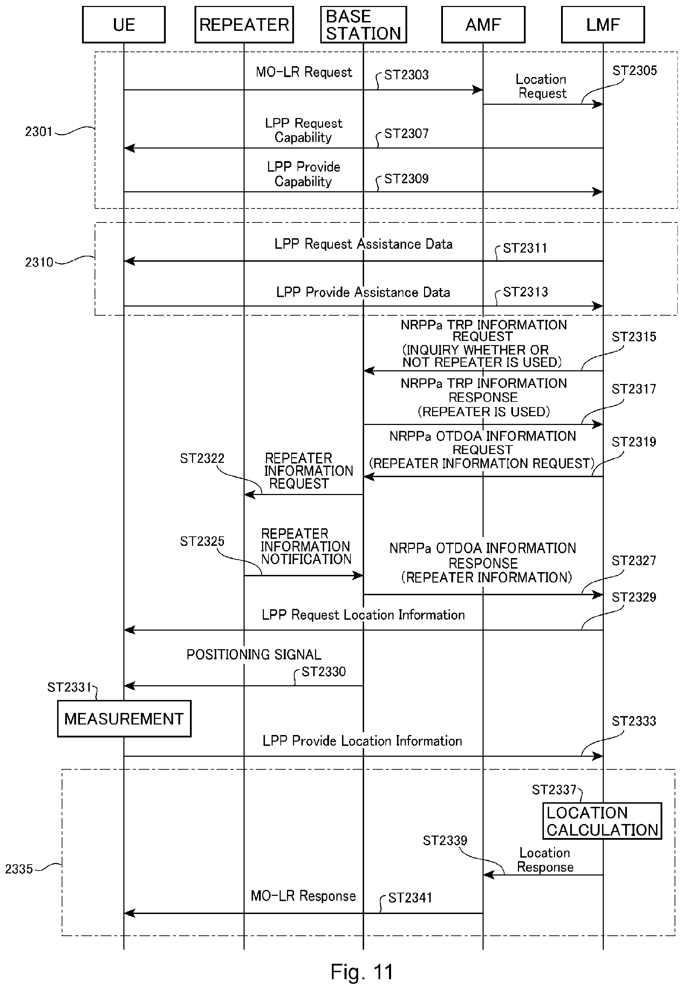

Fig. 11 is a sequence diagram illustrating an example of a positioning procedure in the UE to connect to the base station via the repeater. In the example illustrated in Fig. 11, OTDOA positioning is performed. In Fig. 11, the base station transmits a positioning signal. Fig. 11 illustrates an example in which positioning according to a location information request from the UE (Mobile-Originated Location Request (MO-LR)) is performed. Fig. 11 illustrates an example in which UE-assisted positioning (positioning in which the LMF or the like performs location calculation, using assistance information (for example, positioning signal reception results) from the UE) is performed.

In Fig. 11, signal transmission and reception between the UE and the base station, the AMF, and the LMF are performed via the repeater. Although Fig. 11 omits description of side control information transmitted from the base station to the repeater, with the side control information being transmitted prior to the signal transmission and reception between the UE and the base station, the AMF, and the LMF, an indication of a configuration of a beam from the base station to the repeater is performed. The same holds true for the drawings subsequent to Fig. 11.

In Procedure 2301 illustrated in Fig. 11, a positioning request from the UE and a request and a notification of a positioning capability between the LMF and the UE are performed.

In Steps ST2303 and ST2305 illustrated in Fig. 11, the UE requests the LMF to perform positioning. The request is performed via the AMF. Step ST2303 denotes the request from the UE to the AMF, and Step ST2305 denotes the request from the AMF to the LMF.

In Step ST2307 illustrated in Fig. 11, a positioning capability request from the LMF to the UE is performed. The request is performed using LPP signaling, for example, LPP Request Capability. In Step ST2309, the UE notifies the LMF of a positioning capability. The notification is performed using LPP signaling, for example, LPP Provide Capability.

In Procedure 2310 illustrated in Fig. 11, a request and a notification of assistance data are performed between the LMF and the UE. In Step ST2311, the LMF requests the UE to transmit assistance data. The request is performed using LPP signaling, for example, LPP assistance data request signaling. In Step ST2313, the UE notifies the LMF of the assistance data. The notification is performed using LPP signaling, for example, LPP provide assistance data signaling.

In Step ST2315 illustrated in Fig. 11, the LMF requests the base station to transmit information on whether or not the repeater is used. For the request, NRPPa signaling, for example, NRPPa TRP information request signaling, may be used. The request may include a request for information on a TRP of the base station. The request for the information on whether or not the repeater is used may include a request for information for identifying the repeater, for example, an identifier of the repeater, or may include a request for information on the UE performing communication with the base station via the repeater.

In Step ST2317 illustrated in Fig. 11, the base station notifies the LMF of the information on whether or not the repeater is used. For the notification, NRPPa signaling, for example, NRPPa TRP information response signaling, may be used. The notification may include information on the TRP. In the example illustrated in Fig. 11, information indicating that the repeater is used is notified.

In Step ST2319 illustrated in Fig. 11, the LMF requests the base station to transmit information necessary for OTDOA. For the request, NRPPa signaling, for example, NRPPa OTDOA information request signaling, may be used. The request may include a request for information on the repeater. The information may include information on an indication of start of transmission of the positioning signal. The base station may transmit the positioning signal, for example, a PRS, with a trigger being Step ST2319.

In Step ST2322 illustrated in Fig. 11, the base station requests the repeater to transmit information on the repeater. The request may be performed using L1/L2 signaling, may be performed using MAC signaling, may be performed using RRC signaling, or may be performed using a combination of two or more of the above, for example. In Step ST2325, the repeater notifies the base station of the information on the repeater. The notification may be performed using L1/L2 signaling, may be performed using MAC signaling, may be performed using RRC signaling, or may be performed using a combination of two or more of the above, for example.

In Step ST2327 illustrated in Fig. 11, the base station notifies the LMF of the information necessary for OTDOA. For the notification, NRPPa signaling, for example, NRPPa OTDOA information response signaling, may be used. The notification may include the information on the repeater. The information on the repeater may include information on propagation delay from the base station to the repeater, may include information on the location of the repeater, or may include information on processing delay in the repeater, for example.

In Step ST2329 illustrated in Fig. 11, the LMF indicates reception of the positioning signal to the UE. The indication may be performed using LPP signaling, for example, LPP Request Location Information signaling. The indication may include information on the positioning signal to be received. The UE starts reception operation for the positioning signal, with a trigger being the indication.

In Step ST2330 illustrated in Fig. 11, the positioning signal is transmitted from the base station to the UE. The transmission is performed via the repeater. The repeater receives the positioning signal from the base station, and transmits the signal to the UE. In Step ST2331, the UE measures the positioning signal transmitted from the base station via the repeater.

In Step ST2333 illustrated in Fig. 11, the UE reports measurement results of the positioning signal to the LMF. The report may be performed using LPP signaling, for example, LPP Provide Location Information signaling. The report may include information on a difference between the time of reception of the received positioning signal received from the base station via the repeater and the time of reception of the positioning signal received from another base station, or may include information on such another base station. The positioning signal received by the UE from another base station may be a positioning signal directly received from another base station, or may be a positioning signal received via the repeater connected to the base station. The UE may not be aware of whether the received positioning signal is a positioning signal directly received from the base station or a positioning signal received via the repeater.

In Procedure 2335 illustrated in Fig. 11, location calculation of the UE and a notification of location calculation results are performed.

In Step ST2337 illustrated in Fig. 11, the LMF performs location calculation of the UE. The LMF may perform the calculation using the measurement results of the positioning signal acquired in Step ST2333, may perform the calculation using the information on the repeater acquired in Step ST2327, or may perform the calculation using both of the above.

In Steps ST2339 and ST2341 illustrated in Fig. 11, the LMF notifies the UE of positioning results. The notification is performed via the AMF. Step ST2339 denotes the notification from the LMF to the AMF, and Step ST2341 denotes the notification from the AMF to the UE.

Although the example illustrated in Fig. 11 illustrates a case in which positioning according to MO-LR is performed, similar application may be possible in positioning according to a location information request terminated in the UE (Mobile-Terminated Location Request (MT-LR)), or similar application may be possible in positioning according to a location information request initiated by the network (Network-Induced Location Request (NI-LR)). The same may hold true for the drawings subsequent to Fig. 11.

As another solution, the repeater may generate a positioning signal and transmit the positioning signal. The positioning signal transmitted by the repeater may be a PRS, for example.

The base station may notify the repeater of a configuration of the positioning signal. The notification may include information on time/frequency resources of the positioning signal, may include information on a beam to be used for transmission of the positioning signal, or may include information on a code sequence of the positioning signal. The notification may include a request for information on the repeater. For the notification from the base station to the repeater, L1/L2 signaling may be used, MAC signaling may be used, RRC signaling may be used, or a combination of two or more of the above may be used.

The repeater may perform a configuration of the positioning signal, using the information obtained in the notification. The repeater may start transmission of the positioning signal, with a trigger being the notification. The repeater may notify the base station of completion of the configuration of the positioning signal. In the notification, the information on the repeater may be notified. The information on the repeater may be similar to that described above. For the notification from the repeater to the base station, L1/L2 signaling may be used, MAC signaling may be used, RRC signaling may be used, or a combination of two or more of the above may be used.

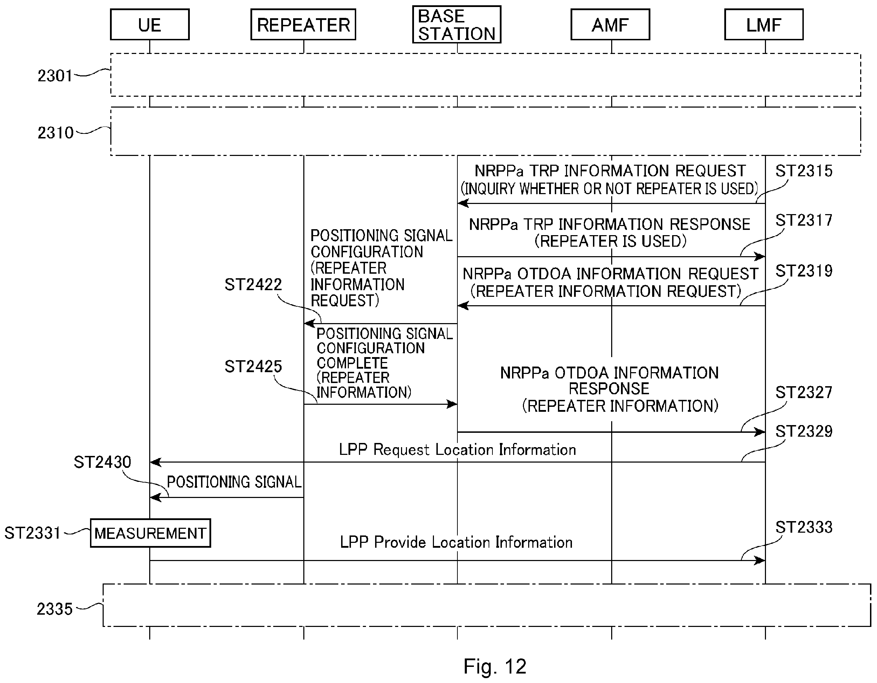

Fig. 12 is a sequence diagram illustrating another example of a positioning procedure in the UE to connect to the base station via the repeater. In the example illustrated in Fig. 12, OTDOA positioning is performed. In Fig. 12, the repeater transmits a positioning signal. In Fig. 12, the same processings as those of Fig. 11 are denoted by the same numbers, and common description will be omitted.

In Procedures 2301 and 2310 illustrated in Fig. 12, Steps ST2315 to ST2319 are the same as those of Fig. 11.

In Step ST2422 illustrated in Fig. 12, the base station notifies the repeater of a configuration of the positioning signal. The notification may include information on resources of the positioning signal, or may include information on a beam to be used for transmission of the positioning signal. The notification may include a request for information on the repeater. In Step ST2422, L1/L2 signaling may be used, MAC signaling may be used, RRC signaling may be used, or a combination of two or more of the above may be used. The repeater performs the configuration of the positioning signal, using the information received in Step ST2422.

In Step ST2425 illustrated in Fig. 12, the repeater may notify the base station of completion of the configuration of the positioning signal. In the notification, the information on the repeater may be notified. The information on the repeater may be similar to that described above. In Step ST2425, L1/L2 signaling may be used, MAC signaling may be used, RRC signaling may be used, or a combination of two or more of the above may be used.

Steps ST2327 and ST2329 illustrated in Fig. 12 are the same as those of Fig. 11.

In Step ST2430 illustrated in Fig. 12, the repeater transmits the positioning signal to the UE. The transmission may be performed using the configuration notified in Step ST2422.

Steps ST2331 and ST2333 and Procedure 2335 illustrated in Fig. 12 are the same as those of Fig. 11.

The base station may notify an apparatus other than the LMF of the information on the repeater. The information on the repeater may be used in another core NW apparatus. For example, the base station may notify the AMF of the information. The AMF may use the information for registration of the repeater, for example. The AMF may determine whether or not the repeater can be registered with the NW, using location information of the repeater, for example. Consequently, for example, use of the repeater can be prevented at the location where transmission of the repeater is not permitted.

The repeater may have a positioning function. For example, the repeater may have a function equivalent to that of the UE in positioning. Positioning of the repeater itself may be performed. In positioning of the repeater, a method similar to that for positioning of the UE may be used, signaling similar to that for positioning of the UE may be used, or signaling similar to that for positioning of the UE may be used.

The repeater may derive the location of the repeater. The derivation in the repeater may be performed using a method similar to that for UE-based positioning (a positioning method in which the UE derives the location of the UE), for example. Consequently, for example, the amount of processing in location calculation in the LMF can be reduced.

Positioning of the repeater and the UE may be simultaneously performed. The repeater and/or the UE may receive the positioning signal transmitted by the base station. The positioning signal received by the repeater and the UE may be the same or may be different. The UE may notify the LMF of measurement results of the positioning signal. The repeater may notify the base station of the information on the repeater, for example, processing delay in the repeater. The base station may notify the LMF of the information. The LMF may calculate the locations of the repeater and the UE, using the information described above. Consequently, for example, positioning of the repeater and the UE can be quickly performed.

The methods disclosed in the first embodiment may be used in a switching manner. For example, transmission of the positioning signal from the base station and generation and transmission of the positioning signal from the repeater may be switched. The base station may notify the repeater of information on the switching. The information may be information indicating whether the positioning signal from the base station is received and is transmitted to the UE, or the repeater itself generates the positioning signal, for example. Using the information, the repeater may receive the positioning signal from the base station and transmit the positioning signal to the UE, or may generate the positioning signal in the repeater and transmit the positioning signal to the UE. Consequently, for example, flexibility in positioning can be enhanced.

The methods disclosed in the first embodiment may be used in UE-based positioning. The LMF may notify the UE of the information on the repeater. For the notification, LPP signaling, for example, LPP provide assistance data signaling, may be used, or other LPP signaling may be used. As another example, the base station may notify the UE of the information on the repeater. For the notification from the base station to the UE, RRC signaling may be used, MAC signaling may be used, or L1/L2 signaling may be used. The UE may derive the location of the UE, using the information notified from the LMF and/or the base station. Consequently, for example, positioning accuracy of the UE to connect to the base station via the repeater can also be enhanced in UE-based positioning.

According to the first embodiment, positioning accuracy can also be secured in positioning of the UE to connect to the base station via the repeater.

### Second Embodiment

In positioning using an uplink signal, methods similar to those of the first embodiment may be applied. Positioning using an uplink signal may be UL-TDOA (see NPL 24 (3GPP TS 38.305)), for example.

For example, the UE to connect to the base station via the repeater may transmit an SRS and the base station may receive the SRS. The repeater may receive the SRS transmitted by the UE and transmit the SRS to the base station. The repeater may amplify the SRS transmitted by the UE and transmit the SRS to the base station. The repeater may perform the amplification operation and/or the transmission operation together with another channel/signal.

The base station may notify the LMF of the information on the repeater. The information may include information similar to the information disclosed in the first embodiment, for example.

The information on the repeater notified from the base station to the LMF may include information on propagation delay from the base station to the repeater, may include information on the location of the repeater, or may include both of the pieces of information described above.

The repeater may notify the base station of the information on the repeater. For the notification, Msg3 in 4-step random access processing may be used, MsgA in 2-step random access may be used, or other signaling, for example, RRC setup complete (RRCSetupComplete) (see NPL 19 (3GPP TS 38.331)), may be used, for example. As another example, the information may be notified by being included in a capability (for example, a UE capability).

The notification of the information from the repeater to the base station may be performed with a trigger being a request from the base station. The base station may request the repeater to transmit the information on the repeater in advance. For the request from the base station to the repeater, Msg2 in 4-step random access processing may be used, or other signaling, for example, RRC setup request signaling (see NPL 19 (3GPP TS 38.331)), may be used, for example. As another example, the request may be notified by being included in a capability (for example, UE capability) request.

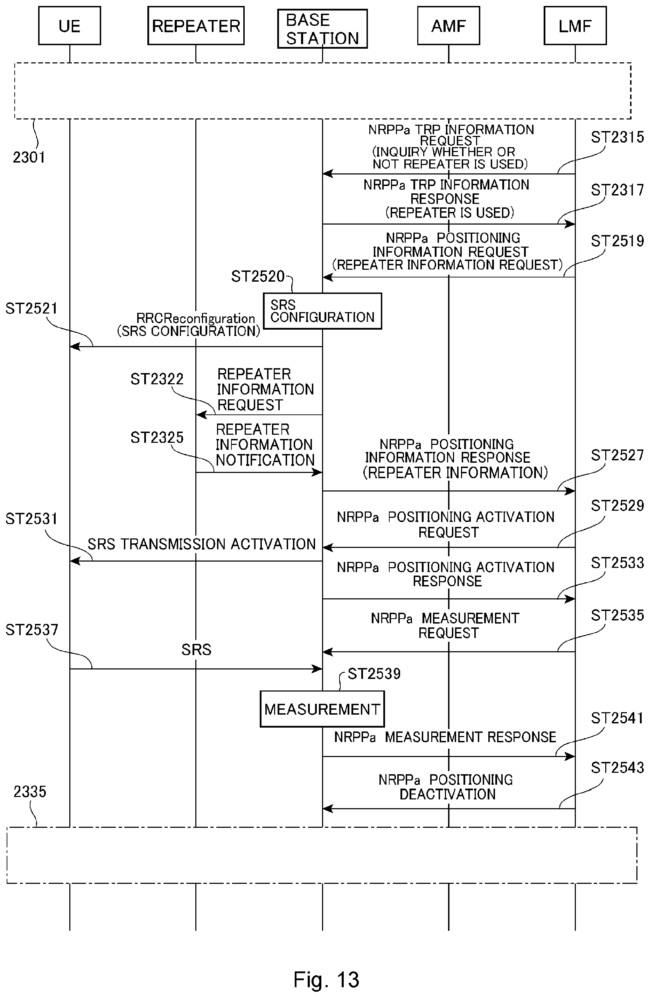

Fig. 13 is a sequence diagram illustrating another example of a positioning procedure in the UE to connect to the base station via the repeater. In the example illustrated in Fig. 13, UL-TDOA positioning is performed. In Fig. 13, the UE transmits an SRS, and the base station receives the SRS. In Fig. 13, the same processings as those of Fig. 11 are denoted by the same numbers, and common description will be omitted.

Procedure 2301 and Steps ST2315 and ST2317 illustrated in Fig. 13 are the same as those of Fig. 11.

In Step ST2519 illustrated in Fig. 13, the LMF requests the base station to transmit information necessary for positioning. For the request, NRPPa signaling, for example, NRPPa positioning information request signaling, may be used. The request may include a request for information on the repeater. The information may include an indication of an SRS configuration. In Step ST2520, the base station performs a configuration of the SRS. In Step ST2521, the base station indicates transmission of the SRS to the UE. For the indication, RRC signaling, for example, RRC reconfiguration signaling, may be used. The indication may include information on a configuration of the SRS.

Steps ST2322 and ST2325 illustrated in Fig. 13 are the same as those of Fig. 11.

In Step ST2527 illustrated in Fig. 13, the base station notifies the LMF of the information necessary for positioning. For the notification, NRPPa signaling, for example, NRPPa positioning information response signaling, may be used. The notification may include the information on the repeater. The information on the repeater may include information on propagation delay from the base station to the repeater, may include information on the location of the repeater, or may include information on processing delay in the repeater, for example.

In Step ST2529 illustrated in Fig. 13, the LMF requests the base station to start transmission of the positioning signal from the UE. For the request, NRPPa signaling, for example, NRPPa POSITIONING ACTIVATION REQUEST signaling, may be used. The request may include information on the UE to start transmission of the positioning signal. In Step ST2531, the base station indicates the UE to start transmission of the positioning signal. For the indication, L1/L2 signaling may be used, MAC signaling may be used, RRC signaling may be used, or a combination of two or more of the above may be used. In Step ST2533, the base station notifies the LMF of completion of the start of transmission of the positioning signal. For the notification, NRPPa signaling, for example, NRPPa POSITIONING ACTIVATION RESPONSE signaling, may be used.

In Step ST2535 illustrated in Fig. 13, the LMF requests the base station to measure the positioning signal. For the request, NRPPa signaling, for example, NRPPa measurement request signaling, may be used.

In Step ST2537 illustrated in Fig. 13, the UE transmits the SRS to the base station as the positioning signal. In Step ST2539, the base station measures the SRS from the UE.

In Step ST2541 illustrated in Fig. 13, the base station notifies the LMF of measurement results of the positioning signal. For the notification, NRPPa signaling, for example, NRPPa measurement response signaling, may be used. In Step ST2543, the LMF indicates the base station to stop transmission of the positioning signal from the UE. For the indication, NRPPa signaling, for example, NRPPa POSITIONING DEACTIVATION signaling, may be used.

Procedure 2335 illustrated in Fig. 13 is the same as that of Fig. 11. The LMF may calculate the location of the UE using the measurement results included in Step ST2541, may calculate the location of the UE using the repeater information included in Step ST2527, or may determine the location of the UE using a combination of the above.

Although the example illustrated in Fig. 13 illustrates a case in which positioning according to MO-LR is performed, similar application may be possible in positioning according to a location information request terminated in the UE (MT-LR), or similar application may be possible in positioning according to a location information request initiated by the network (NI-LR).

As another solution, the repeater may measure the positioning signal. The repeater may receive the positioning signal. The positioning signal received by the repeater may be an SRS, for example. The base station may notify the repeater of a configuration of the positioning signal. The repeater may start reception operation of the positioning signal, with a trigger being the notification. The repeater may notify the base station of completion of the configuration of the positioning signal. The notification may include the information on the repeater. The information on the repeater may be similar to that described above.

The repeater may notify the base station of reception results of the positioning signal. The notification may include information on the time of reception of the positioning signal, may include information on a reception angle of the positioning signal, may include information on received power of the positioning signal (for example, SRS-RSRP), or may include information disclosed in TRP Measurement Result described in NPL 33 (3GPP TS 38.455). The LMF may calculate the location of the UE, using the information.

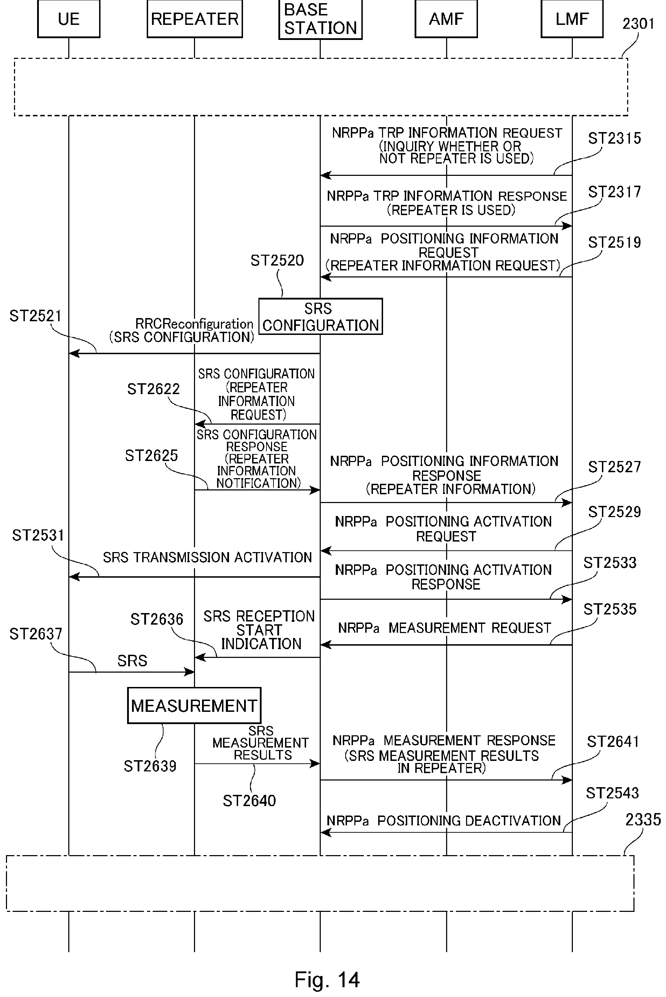

Fig. 14 is a sequence diagram illustrating another example of a positioning procedure in the UE to connect to the base station via the repeater. In the example illustrated in Fig. 14, UL-TDOA positioning is performed. In Fig. 14, the UE transmits an SRS, and the repeater receives the SRS. In Fig. 14, the same processings as those of Fig. 11 and Fig. 13 are denoted by the same numbers, and common description will be omitted.

Procedure 2301 and Steps ST2315 and ST2317 illustrated in Fig. 14 are the same as those of Fig. 11. Steps ST2519 to ST2521 are the same as those of Fig. 13.

In Step ST2622 illustrated in Fig. 14, the base station notifies the repeater of a configuration of the SRS. The notification may include information on resources of the SRS, or may include information on a beam to be used for reception of the SRS. The notification may include a request for information on the repeater. In Step ST2622, L1/L2 signaling may be used, MAC signaling may be used, RRC signaling may be used, or a combination of two or more of the above may be used. The repeater performs a configuration of SRS reception, using the information notified in Step ST2622.

In Step ST2625 illustrated in Fig. 14, the repeater may notify the base station of completion of the configuration of SRS reception. The notification may include the information on the repeater. The information on the repeater may be similar to that described above. In Step ST2625, L1/L2 signaling may be used, MAC signaling may be used, RRC signaling may be used, or a combination of two or more of the above may be used.

Steps ST2527 to ST2535 illustrated in Fig. 14 are the same as those of Fig. 13.

In Step ST2636 illustrated in Fig. 14, the base station indicates the repeater to start reception of the SRS. The notification may include information on resources of the SRS, or may include information on a beam to be used for reception of the SRS. The notification may include a request for information on the repeater. In Step ST2636, L1/L2 signaling may be used, MAC signaling may be used, RRC signaling may be used, or a combination of two or more of the above may be used. The repeater starts SRS reception operation, with a trigger being Step ST2636.

In Step ST2637 illustrated in Fig. 14, the UE transmits the SRS to the repeater as the positioning signal. In Step ST2639, the repeater measures the SRS from the UE.

In Step ST2640 illustrated in Fig. 14, the repeater notifies the base station of SRS measurement results. For the notification, L1/L2 signaling may be used, MAC signaling may be used, RRC signaling may be used, or a combination of two or more of the above may be used. In Step ST2641, the base station notifies the LMF of measurement results of the positioning signal. The notification may include information on the SRS measurement results in the repeater included in Step ST2640. For the notification, NRPPa signaling, for example, NRPPa measurement response signaling, may be used.

Step ST2543 illustrated in Fig. 14 is the same as that of Fig. 13. Procedure 2335 illustrated in Fig. 14 is the same as that of Fig. 11. The LMF may calculate the location of the UE using the measurement results included in Step ST2641, may calculate the location of the UE using the repeater information included in Step ST2527, or may determine the location of the UE using a combination of two or more of the above.

Positioning of the repeater and the UE using an uplink signal may be simultaneously performed. The repeater and/or the base station may receive the positioning signal transmitted by the UE. The positioning signal received by the repeater and the base station may be the same or may be different. The repeater may notify the base station of positioning signal reception results. The base station may notify the LMF of positioning signal reception results obtained by the base station. The notification from the base station to the LMF may include the positioning signal reception results in the repeater, or may include information on the repeater. The LMF may calculate the locations of the repeater and the UE, using the information described above. Consequently, for example, positioning of the repeater and the UE can be quickly performed.

The methods disclosed in the second embodiment may be used in UE-based positioning. The LMF may notify the UE of the information on the repeater. For the notification, LPP signaling, for example, LPP provide assistance data signaling, may be used, or other LPP signaling may be used. As another example, the base station may notify the UE of the information on the repeater. For the notification from the base station to the UE, RRC signaling may be used, MAC signaling may be used, or L1/L2 signaling may be used. The UE may derive the location of the UE, using the information notified from the LMF and/or the base station. Consequently, for example, positioning accuracy of the UE to connect to the base station via the repeater can also be enhanced in UE-based positioning.

The methods disclosed in the second embodiment may be used in a switching manner. For example, measurement of the SRS in the repeater and measurement of the SRS in the base station may be switched. The base station may notify the repeater of information on the switching. The information may be information indicating whether measurement of the SRS is performed by the base station or is performed by the repeater, for example. Using the information, the repeater may receive the SRS from the UE and transmit the SRS to the base station, or may measure the SRS in the repeater. Consequently, for example, flexibility of the communication system can be enhanced.

According to the second embodiment, positioning accuracy can also be secured in positioning of the UE to connect to the base station via the repeater using an uplink signal.

### Third Embodiment

Signaling may be transmitted and received between the repeater and the LMF. The signaling may be NRPPa signaling, for example.

The base station may transmit NRPPa signaling for the repeater from the LMF to the repeater. The repeater may receive the NRPPa signaling transmitted via the base station. The repeater may transmit NRPPa signaling for the LMF to the base station. The base station may receive the NRPPa signaling for the LMF transmitted from the repeater.

An NRPPa protocol may be terminated between the repeater and the LMF. As another example, the NRPPa protocol may be terminated between the base station and the LMF. The NRPPa protocol may be terminated between the base station and the repeater. The base station may relay the NRPPa signaling transmitted from the LMF to the repeater, or may relay the NRPPa signaling transmitted from the repeater to the LMF.

RRC signaling may be used for transmission and reception of the NRPPa signaling. The NRPPa signaling may be capsuled in the RRC signaling transmitted and received between the base station and the repeater. The NRPPa signaling may be signaling terminated between the base station and the repeater, or may be signaling terminated between the repeater and the LMF.

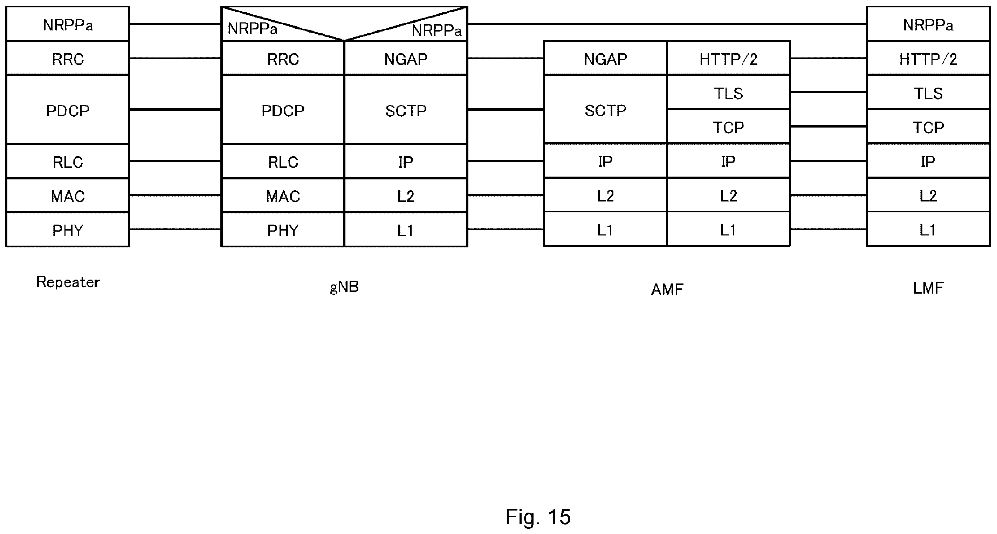

Fig. 15 is a diagram illustrating an example of protocol stacks in the repeater, the base station, the AMF, and the LMF. In the example illustrated in Fig. 15, the base station relays NRPPa signaling between the LMF and the repeater.

NAS signaling may be used for transmission and reception of the NRPPa signaling. The NAS signaling may be transmitted and received between the AMF and the repeater. The NRPPa signaling may be capsuled in the NAS signaling transmitted and received between the AMF and the repeater. The NRPPa signaling may be signaling terminated between the repeater and the LMF. The NAS signaling may be transmitted using RRC signaling. The NAS signaling may be capsuled in the RRC signaling.

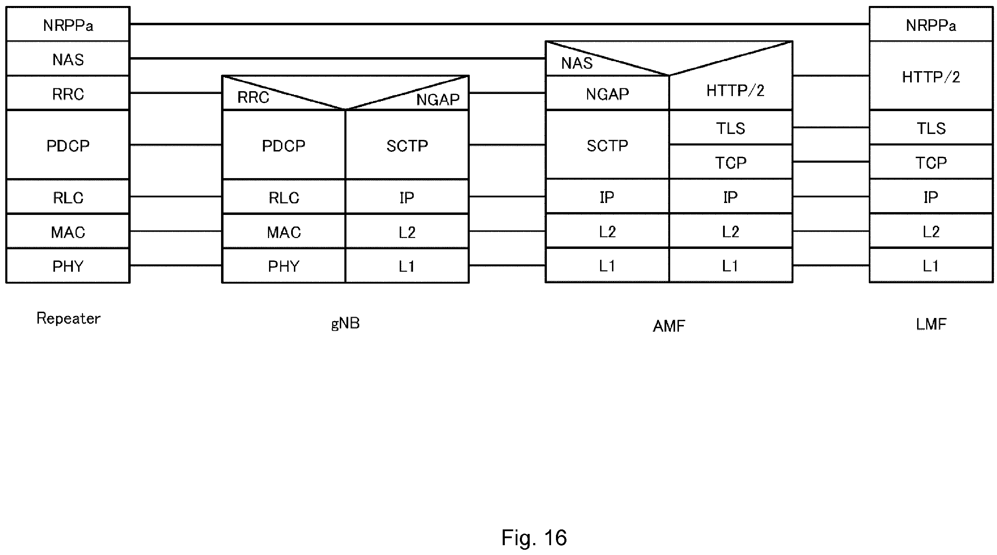

Fig. 16 is a diagram illustrating another example of protocol stacks in the repeater, the base station, the AMF, and the LMF. In the example illustrated in Fig. 16, NRPPa signaling between the repeater and the LMF is transmitted and received using NAS signaling between the repeater and the AMF. The NAS signaling between the repeater and the AMF is transmitted and received using RRC signaling between the repeater and the base station.

As an example of signaling between the LMF and the repeater, the LMF may request the repeater to transmit information on the repeater. The information on the repeater may be similar to that of the first embodiment. NRPPa signaling may be used for the request from the LMF to the repeater. For example, OTDOA information request signaling may be used, positioning information request signaling may be used, TRP information request signaling may be used, positioning activation request signaling may be used, PRS configuration request signaling may be used, measurement preconfiguration required signaling may be used, or assistance information control signaling may be used. New NRPPa signaling may be provided. The new NRPPa signaling may be used for the notification from the LMF to the repeater.

As an example of signaling between the LMF and the repeater, the repeater may notify the LMF of the information on the repeater. The information on the repeater may be similar to that of the first embodiment. The repeater may perform the notification, with a trigger being the request from the LMF described above.

NRPPa signaling may be used for the notification from the repeater to the LMF, for example. For example, OTDOA information response signaling may be used, positioning information response signaling may be used, positioning information update signaling may be used, TRP information response signaling may be used, positioning activation response signaling may be used, PRS configuration response signaling may be used, measurement preconfiguration confirm signaling may be used, or assistance information feedback signaling may be used. Consequently, for example, complexity in the communication system can be avoided. New NRPPa signaling may be provided. The new NRPPa signaling may be used for the notification from the repeater to the LMF.

In the positioning procedure disclosed in the first embodiment, NRPPa signaling may be transmitted and received between the repeater and the LMF. For example, in a case in which the positioning signal is transmitted from the base station to the UE via the repeater, NRPPa signaling may be transmitted and received between the repeater and the LMF.

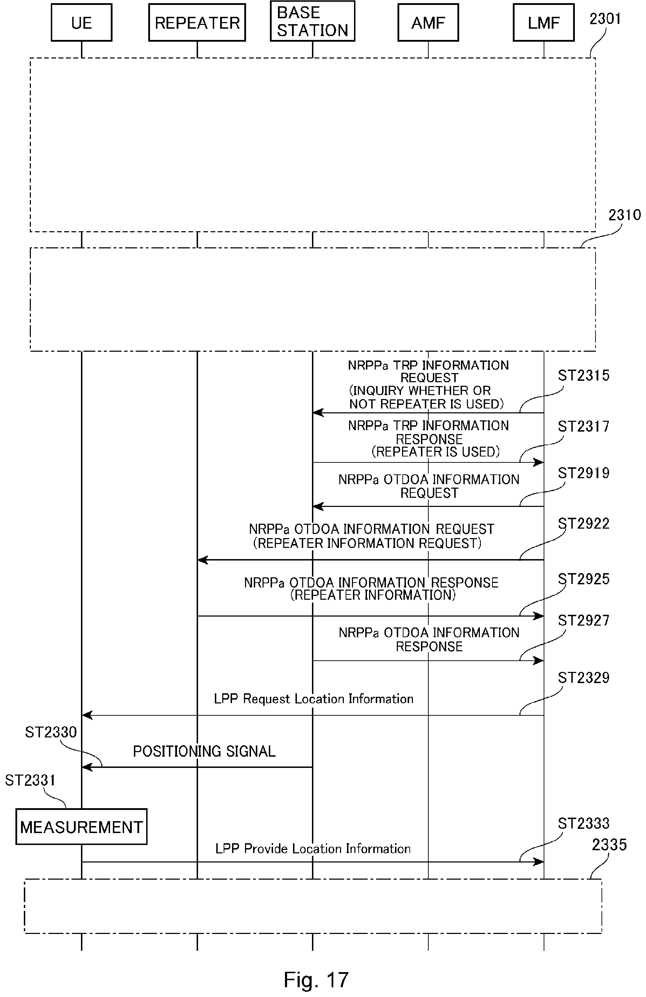

Fig. 17 is a sequence diagram illustrating another example of a positioning procedure in the UE to connect to the base station via the repeater. In the example illustrated in Fig. 17, OTDOA positioning is performed. In Fig. 17, the base station transmits a positioning signal. Fig. 17 illustrates an example in which positioning according to a location information request from the UE is performed. Fig. 17 illustrates an example in which UE-assisted positioning is performed. In Fig. 17, the same processings as those of Fig. 11 are denoted by the same numbers, and common description will be omitted.

In Procedures 2301 and 2310 illustrated in Fig. 17, Steps ST2315 and ST2317 are the same as those of Fig. 11.

In Step ST2919 illustrated in Fig. 17, the LMF requests information necessary for OTDOA from the base station. For the request, the same signaling as that in Step ST2319 illustrated in Fig. 11 may be used. The request may not include a request for information on the repeater.

In Step ST2922 illustrated in Fig. 17, the LMF requests information on the repeater from the repeater. For the request, NRPPa signaling, for example, NRPPa OTDOA information request signaling, may be used.

In Step ST2925 illustrated in Fig. 17, the repeater notifies the LMF of the information on the repeater. For the notification, NRPPa signaling, for example, NRPPa OTDOA information response signaling, may be used.

In Step ST2927 illustrated in Fig. 17, the base station notifies the LMF of the information necessary for OTDOA. For the notification, NRPPa signaling, for example, NRPPa OTDOA information response signaling, may be used. The notification may not include the information on the repeater.

Steps ST2329 to ST2333 and Procedure 2335 illustrated in Fig. 17 are the same as those of Fig. 11.

As another example, in a case in which the repeater transmits the positioning signal to the UE, NRPPa signaling may be transmitted and received between the repeater and the LMF.

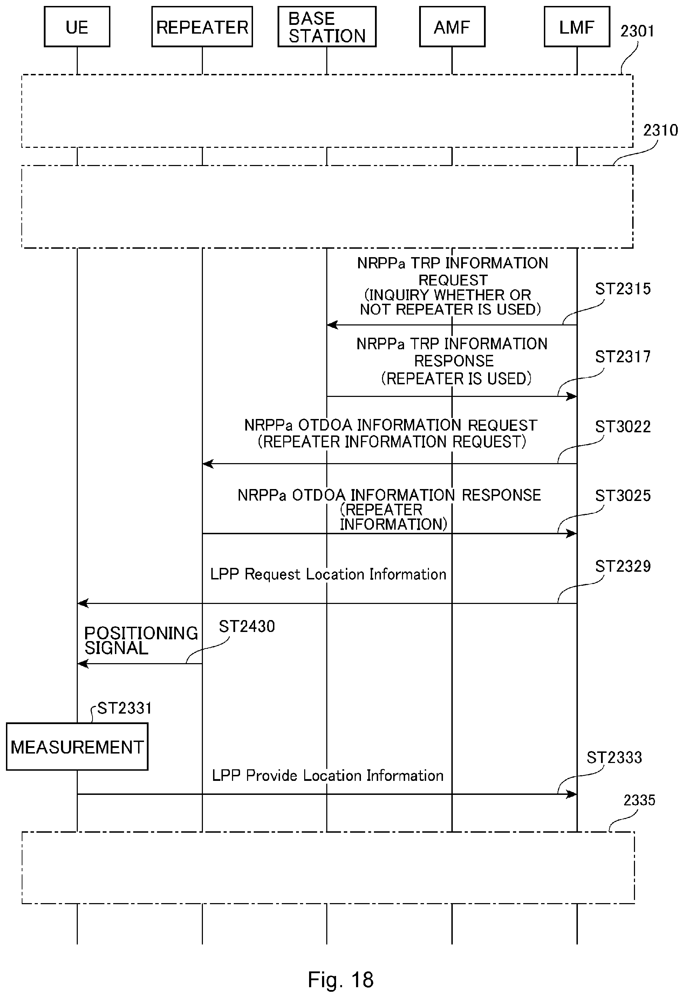

Fig. 18 is a sequence diagram illustrating another example of a positioning procedure in the UE to connect to the base station via the repeater. In the example illustrated in Fig. 18, OTDOA positioning is performed. In Fig. 30, the repeater transmits a positioning signal. In Fig. 18, the same processings as those of Fig. 11 and Fig. 12 are denoted by the same numbers, and common description will be omitted.

In Procedures 2301 and 2310 illustrated in Fig. 18, Steps ST2315 and ST2317 are the same as those of Fig. 11.

In Step ST3022 illustrated in Fig. 18, the LMF requests the repeater to transmit information necessary for OTDOA. Step ST3022 may include a request for information on the repeater. The request may include information on an indication of transmission of the positioning signal. For the request, NRPPa signaling, for example, NRPPa OTDOA information request signaling, may be used.

In Step ST3025 illustrated in Fig. 18, the repeater notifies the LMF of the information necessary for OTDOA. The notification may include the information on the repeater. For the notification, NRPPa signaling, for example, NRPPa OTDOA information response signaling, may be used.

Step ST2329 illustrated in Fig. 18 is the same as that of Fig. 11. Step ST2430 is the same as that of Fig. 12. Steps ST2331 and ST2333 and Procedure 2335 are the same as those of Fig. 11.

In the positioning procedure disclosed in the second embodiment, NRPPa signaling may be transmitted and received between the repeater and the LMF. For example, in a case in which the UE transmits an SRS and the base station receives the SRS, NRPPa signaling may be transmitted and received between the repeater and the LMF.

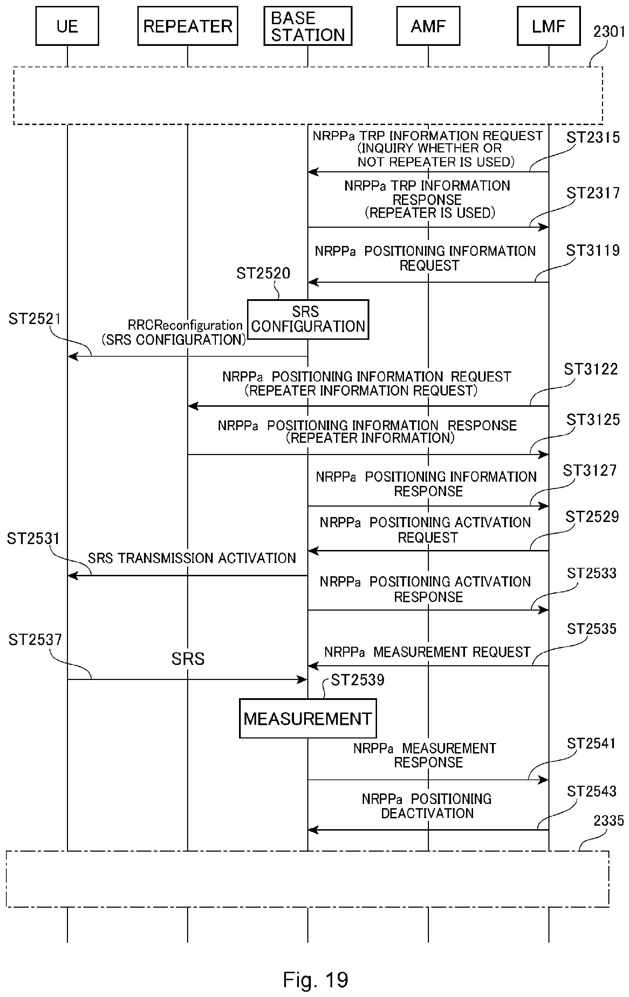

Fig. 19 is a sequence diagram illustrating another example of a positioning procedure in the UE to connect to the base station via the repeater. In the example illustrated in Fig. 19, UL-TDOA positioning is performed. In Fig. 19, the UE transmits an SRS, and the base station receives the SRS. In Fig. 19, the same processings as those of Fig. 11 and Fig. 13 are denoted by the same numbers, and common description will be omitted.

Procedure 2301 and Steps ST2315 and ST2317 illustrated in Fig. 19 are the same as those of Fig. 11.

In Step ST3119 illustrated in Fig. 19, the LMF requests the base station to transmit information necessary for positioning. For the request, NRPPa signaling, for example, NRPPa positioning information request signaling, may be used. The information may include an indication of an SRS configuration. The request may not include a request for information on the repeater.

Steps ST2520 and ST2521 illustrated in Fig. 19 are the same as those of Fig. 13.

In Step ST3122 illustrated in Fig. 19, the LMF requests the repeater to transmit information on the repeater. For the request, NRPPa signaling, for example, NRPPa positioning information request signaling, may be used.

In Step ST3125 illustrated in Fig. 19, the repeater notifies the LMF of the information on the repeater. The information on the repeater may include information on propagation delay from the base station to the repeater, may include information on the location of the repeater, or may include information on processing delay in the repeater, for example. For the notification, NRPPa signaling, for example, NRPPa positioning information response signaling, may be used.

In Step ST3127 illustrated in Fig. 19, the base station notifies the LMF of the information necessary for positioning. For the notification, NRPPa signaling, for example, NRPPa positioning information response signaling, may be used. The notification may not include the information on the repeater.

Steps ST2529 to ST2543 illustrated in Fig. 19 are the same as those of Fig. 13. Procedure 2335 is the same as that of Fig. 11.

As another example, in a case in which the UE transmits an SRS and the repeater receives the SRS, NRPPa signaling may be transmitted and received between the repeater and the LMF.

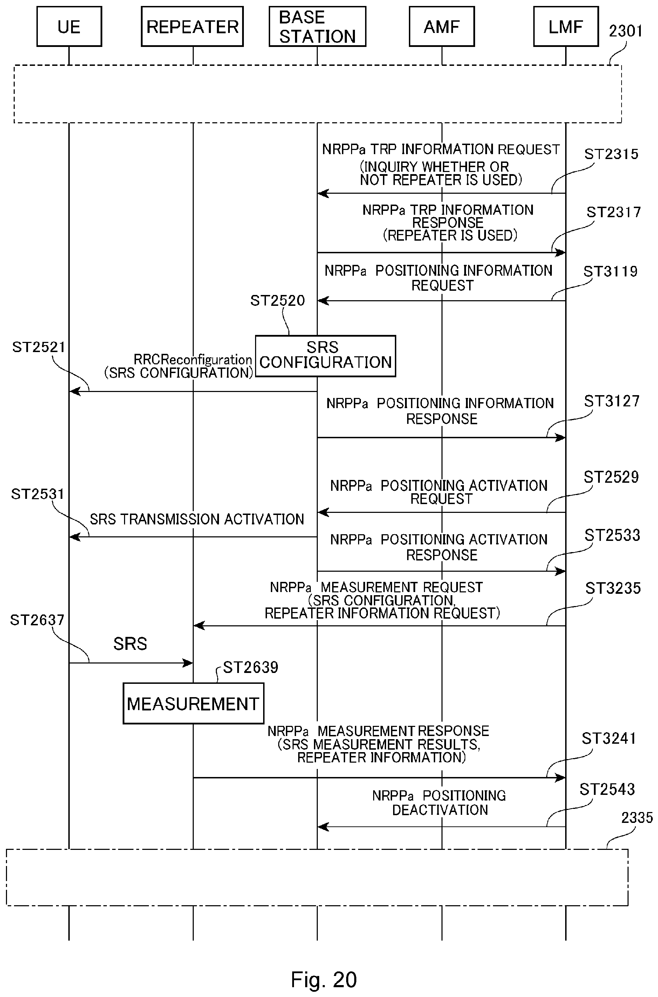

Fig. 20 is a sequence diagram illustrating another example of a positioning procedure in the UE to connect to the base station via the repeater. In the example illustrated in Fig. 20, UL-TDOA positioning is performed. In Fig. 20, the UE transmits an SRS, and the repeater receives the SRS. In Fig. 20, the same processings as those of Fig. 11, Fig. 13, Fig. 14, and Fig. 19 are denoted by the same numbers, and common description will be omitted.

Procedure 2301 and Steps ST2315 and ST2317 illustrated in Fig. 20 are the same as those of Fig. 11. Step ST3119 is the same as that of Fig. 19. Steps ST2520 and ST2521 are the same as those of Fig. 13. Step ST3127 is the same as that of Fig. 19. Steps ST2529 to ST2533 are the same as those of Fig. 13.

In Step ST3235 illustrated in Fig. 20, the LMF requests the repeater to measure the positioning signal. For the request, NRPPa signaling, for example, NRPPa measurement request signaling, may be used. The request may include information on resources of the SRS, or may include information on a beam to be used for reception of the SRS. The request may include a request for information on the repeater.

Steps ST2637 and ST2639 illustrated in Fig. 20 are the same as those of Fig. 14.

In Step ST3241 illustrated in Fig. 20, the repeater notifies the LMF of SRS measurement results. For the notification, NRPPa signaling, for example, NRPPa measurement response signaling, may be used. The notification may include the information on the repeater.

Step ST2543 illustrated in Fig. 20 is the same as that of Fig. 13. Procedure 2335 is the same as that of Fig. 11.

According to the third embodiment, the amount of processing of the positioning signaling in the base station can be reduced.

### First Alteration of Third Embodiment

As another example of signaling transmitted and received between the repeater and the LMF, the signaling may be LPP signaling.

The base station may transmit LPP signaling for the repeater from the LMF to the repeater. The repeater may receive the LPP signaling transmitted via the base station. The repeater may transmit LPP signaling for the LMF to the base station. The base station may receive the LPP signaling for the LMF transmitted from the repeater. An LPP protocol may be terminated between the repeater and the LMF.

NAS signaling may be used for transmission and reception of the LPP signaling. The NAS signaling may be transmitted and received between the AMF and the repeater. The LPP signaling may be capsuled in the NAS signaling transmitted and received between the AMF and the repeater. The LPP signaling may be signaling terminated between the repeater and the LMF. The NAS signaling may be transmitted using RRC signaling. The NAS signaling may be capsuled in the RRC signaling.

As an example of protocol stacks for the LPP signaling in the repeater, the base station, the AMF, and the LMF, protocol stacks with NRPPa illustrated in Fig. 16 being replaced by LPP may be used.

As an example of signaling between the LMF and the repeater, the LMF may request the repeater to transmit information on the repeater. The information on the repeater may be similar to that of the first embodiment. LPP signaling may be used for the request from the LMF to the repeater. The signaling may be an LPP request capability, may be an LPP assistance data request, or may be LPP request location information, for example. New LPP signaling may be provided. The new LPP signaling may be used for the request from the LMF to the repeater.

As an example of signaling between the LMF and the repeater, the repeater may notify the LMF of the information on the repeater. The information on the repeater may be similar to that of the first embodiment. The repeater may perform the notification, with a trigger being the request from the LMF described above.

LPP signaling may be used for the notification from the repeater to the LMF. The LPP signaling may be an LPP provide capability, may be LPP provide assistance data, or may be LPP provide location information, for example. New LPP signaling may be provided. The new LPP signaling may be used for the notification from the repeater to the LMF.

In the positioning procedure disclosed in the first embodiment, LPP signaling may be transmitted and received between the repeater and the LMF. For example, in a case in which the positioning signal is transmitted from the base station to the UE via the repeater, LPP signaling may be transmitted and received between the repeater and the LMF. As an example of an operation sequence, an operation sequence with Step ST2922 illustrated in Fig. 17 being replaced by LPP signaling, for example, an LPP assistance data request, may be used, or an operation sequence with Step ST2925 illustrated in Fig. 17 being replaced by LPP signaling, for example, LPP provide assistance data, may be used.

As another example, in a case in which the repeater transmits the positioning signal to the UE, LPP signaling may be transmitted and received between the repeater and the LMF. As an example of an operation sequence, an operation sequence with Step ST3022 illustrated in Fig. 18 being replaced by LPP signaling, for example, an LPP assistance data request, may be used, or an operation sequence with Step ST3025 illustrated in Fig. 18 being replaced by LPP signaling, for example, LPP provide assistance data, may be used.

In the positioning procedure disclosed in the second embodiment, LPP signaling may be transmitted and received between the repeater and the LMF. For example, in a case in which the UE transmits an SRS and the base station receives the SRS, LPP signaling may be transmitted and received between the repeater and the LMF. As an example of an operation sequence, an operation sequence with Step ST3122 illustrated in Fig. 19 being replaced by LPP signaling, for example, an LPP assistance data request, may be used, or an operation sequence with Step ST3125 illustrated in Fig. 19 being replaced by LPP signaling, for example, LPP provide assistance data, may be used.

As another example, in a case in which the UE transmits an SRS and the repeater receives the SRS, LPP signaling may be transmitted and received between the repeater and the LMF. As an example of an operation sequence, an operation sequence with Step ST3235 illustrated in Fig. 20 being replaced by LPP signaling, for example, LPP request location information or an LPP assistance data request, may be used, or an operation sequence with Step ST3241 illustrated in Fig. 20 being replaced by LPP signaling, for example, LPP provide location information or LPP provide assistance data, may be used.

According to the first alteration, the amount of processing of the positioning signaling in the base station can be reduced. Complexity of design of the protocol stack in the repeater can be avoided.

In the present disclosure, although the smart repeater is described, a reflector or a reconfigurable intelligent surface (RIS) may be used, unless otherwise specifically noted. Consequently, for example, power consumption in the communication system can be reduced, and coverage of the base station can be enhanced.

In the present disclosure, although there is a description of the gNB or the cell, it may be the gNB or may be the cell, unless otherwise specifically noted.

The embodiments and their alterations described above are merely illustrative, and the embodiments and their alterations can be freely combined. Any component in the embodiments and their alterations can be modified or omitted as appropriate.

For example, in the embodiments and their alterations described above, a subframe is an example of a time unit of communication in the fifth generation communication system. The subframe may be a scheduling unit. In the embodiments and their alterations described above, processing described to be performed in a subframe unit may be performed in a TTI unit, a slot unit, a sub-slot unit, or a mini-slot unit.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

### Reference Signs List

- 202: Communication terminal apparatus (mobile terminal),
- 210: Communication system,
- 213, 240-1, 240-2, 750, 801: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell,
- 803: Coverage,
- 805, 806, 811, 812, 905, 906: UE,
- 807, 808: UL/DL communication,
- 810, 814: SL communication,
- 901: IAB donor CU,
- 902: IAB donor DU,
- 903, 904: IAB node.

## Claims

1. A communication system comprising:
a core network-side apparatus provided with a location management function of a fifth generation radio access system;
a base station applied to the fifth generation radio access system; and
a repeater configured to perform relay processing between the base station and a communication terminal, wherein
the repeater is configured to notify the core network-side apparatus of at least one of information on propagation delay between the base station in connection and the repeater, information on a location of the repeater, and information on processing delay in the repeater,
the communication terminal is configured to perform measurement of a positioning signal transmitted by the repeater, and notify the core network-side apparatus of measurement results of the positioning signal, and
the core network-side apparatus is configured to calculate a location of the communication terminal, based on the information notified from the repeater and the measurement results notified from the communication terminal.

2. A communication system comprising:
a core network-side apparatus provided with a location management function of a fifth generation radio access system;
a base station applied to the fifth generation radio access system; and
a repeater configured to perform relay processing between the base station and a communication terminal, wherein
the repeater is configured to notify the core network-side apparatus of at least one of information on propagation delay between the base station in connection and the repeater, information on a location of the repeater, and information on processing delay in the repeater, perform measurement of a positioning signal transmitted by the communication terminal, and notify the core network-side apparatus of measurement results of the positioning signal, and
the core network-side apparatus is configured to calculate a location of the communication terminal, based on the information and the measurement results notified from the repeater.
